# EUROPEAN PATENT SPECIFICATION

(11) **EP 1 632 097 B1**
(45) Date of publication and mention of the grant of the patent: **23.11.2016**
(21) Application number: 04751695.0
(22) Date of filing: 05.05.2004
(51) Int. Cl.: H04W 24/00, H04W 92/02, H04W 88/06

(54) **COMMUNICATIONS SERVICE SEARCHING IN MULTI-BAND WIRELESS COMMUNICATIONS DEVICE AND METHOD**
KOMMUNIKATIONSDIENST-SUCHE IN MEHRBANDIGEN DRAHTLOSEN KOMMUNIKATIONSGERÄT UND VERFAHREN
RECHERCHE DE SERVICES DE COMMUNICATION DANS DES DISPOSITIFS DE COMMUNICATION SANS FIL MULTIBANDE ET PROCÉDÉ ASSOCIÉ

(30) Priority: 10.06.2003 US 458700
(43) Date of publication of application: 08.03.2006
(73) Proprietor: Google Technology Holdings LLC, Mountain View, CA 94043 (US)
(72) Inventor: RAGER, Kent D., Gurnee, IL 60031 (US); ANDERSEN, Niels Peter Skov, DK-4000 Roskilde (DK); OTTING, Marcia J., Mundelein, IL 60060 (US)
(74) Representative: Boult Wade Tennant
(86) International application number: PCT/US2004/014429
(87) International publication number: WO 2005/001503

(56) References cited:
- US-A- 5 940 746
- US-A- 5 950 130
- US-A1- 2002 082 010
- US-A1- 2002 082 010
- US-A1- 2003 083 064
- US-B1- 6 282 419
- US-B1- 6 543 172
- US-B2- 6 754 491

## Description

### FIELD OF THE DISCLOSURE

The present disclosure relates generally to searching for network providers in wireless communications systems, and more particularly to channel scanning techniques in mobile wireless communications devices, for example, in multi-band cellular telephone handsets, and methods therefor.

### BACKGROUND OF THE DISCLOSURE

In the past, Global System For Mobile Communications (GSM) cellular communications systems operating on different frequency bands did not provide service in the same geographical areas. For example, historically, European GSM Public Land Mobile Networks (PLMNs) operated in the 900 & 1800 MHz bands, and in the United States GSM PLMNs operated in the 850 & 1900 MHz bands. In the past, therefore, it was unnecessary for multi-mode cellular telephone handsets, or mobile stations, for example, 900/1800 MHz and 850/1900 MHz dual-mode mobile stations, to operate in more than one mode at any time.

More recently, wireless communications service providers have begun to provide service in the same geographical area on frequencies that were previously separated geographically. In some Southeast Asian countries, for example, GSM communications carriers provide 900 & 1800 MHz bands and 1900 MHz band services in the same geographical area. In the near future, it is anticipated that wireless communications carriers will increasingly provide service in bands that were once provided in mutually exclusive regions, for example, GSM service providers will provide 850 & 1900 MHz band services in the same geographical regions as 900 & 1800 MHz band services.

Cellular mobile stations must generally scan all bands available in a particular service area when searching for home and preferred networks or PLMNs. The 3^{rd} Generation Partnership Project (3GPP) telecommunications specification 23.122, Section 4.4.3, for example, requires mobile stations to scan for the Home PLMN (H-PLMN) and preferred PLMNs on all bands supported by the mobile stations. However, increasing the number of frequency bands scanned during each scanning period increases current drain in the mobile stations.

US 2002/0068574 entitled "Network Selection In A Mobile Telecommunications System" discloses a mobile station that scans for a home network regardless of the network or mode in which the mobile station is or was last configured to operate. If the home network (i.e., H-PLMN) is found, the user is prompted to manually select or configure the mobile station to operate on the HPLMN to reduce communications service charges. If the user does not manually select the H-PLMN within a time-out period, the mobile station attempts to operate in an alternative network.

The various aspects, features and advantages of the disclosure will become more fully apparent to those having ordinary skill in the art upon careful consideration of the following Detailed Description thereof with the accompanying drawings described below.

US patent no. 5,950,130 describes a mobile station with intelligent roaming and over-the-air programming features. A System Access List (SAL) is programmed into the memory of the mobile station over-the-air or via a physical interface and is used to select a preferred system for service. When the mobile station is powered on, it scans the home band first, then a secondary band if a control channel is not found on the home band. If the mobile station determines that it is located in its home system, it remains on that band and obtains service from the home system. If the mobile station is not located within its home system, the SAL is searched to determine if there is a preferred system in the same areas as the current system. If not, then the mobile station obtains service on the current system. If the SAL indicates there is a preferred system in the same areas as the current system, then the SAL also indicates the exact band(s) where a preferred system may be located.

US patent no. 6,282,419 describes an apparatus and method or improving the rescan capability of a telecommunications system searching for an Acceptable Service Provider (ASP) after a failure by a given mobile terminal to link with the ASP. After a mobile terminal's communication link with an ASP has been severed or during startup, i.e., whenever the ASP is temporarily unavailable, a mobile terminal, now camped upon an Unacceptable Service Provider, performs one or more partial rescans to reestablish contact with the APS before performing a full power-up rescan.

US patent no. 5,940,746 describes an apparatus for scanning among a plurality of channels in a radio communication system. Control circuitry controls receive circuitry to scan through all of the plurality of channels one at a time.

### BRIEF DESCRIPTION OF THE DRAWINGS

FIG. 1 illustrates a geographical region served by more than one communications network.
FIG. 2 is an exemplary communications service searching process flow diagram.
FIG. 3 is another communications service searching process flow diagram.
FIG. 4 is another exemplary communications service searching process flow diagram.

### DETAILED DESCRIPTION

The invention is set forth in the independent claims. Preferred embodiments are defined by the dependent claims.

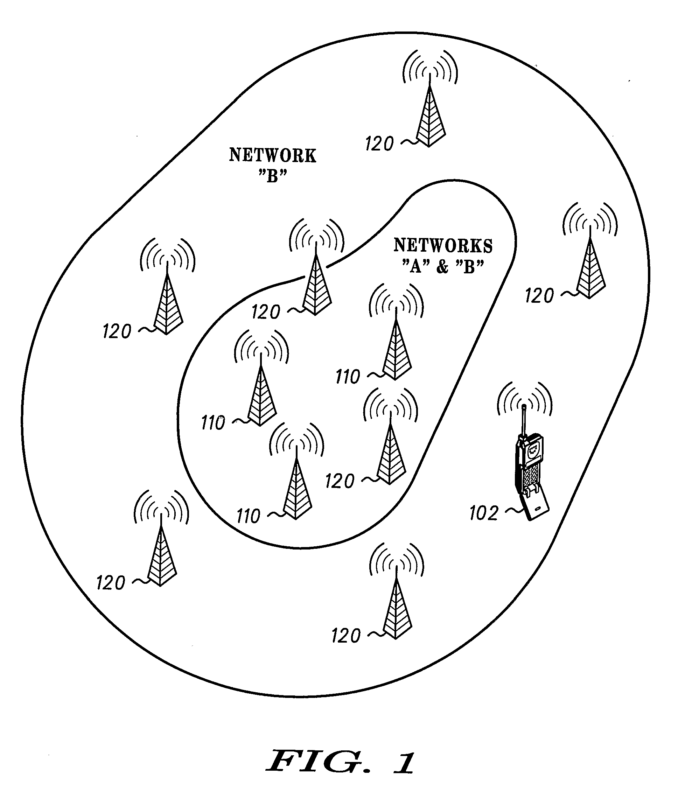

FIG. 1 illustrates a geographical region 100 served by a first network "A" and a second network "B", wherein at least a portion of the region is served by both networks "A" and "B". In one example not in accordance with the invention, the first and second networks are different Public Land Mobile Networks (PLMNs), for example, one network is a Home-PLMN (H-PLMN) and the other network is a Visitor-PLMN (V-PLMN). Generally, the first and second networks "A" and "B" provide communications services in corresponding first and second different frequency bands, where in each frequency band includes at least one frequency. In one particular example not in accordance with the invention,
one of the first and second networks is a Global System For Mobile Communications (GSM) network that provides service on 900 & 1800 MHz frequency bands, and the other of the first and second networks is a GSM network that provides service on 850 and/or 1900 MHz frequency bands. In other examples not in accordance with the invention, the first and second networks provide communications services on frequencies other than the exemplary GSM frequency bands. In still other examples not in accordance with the invention the first and second networks "A" and "B" have different communications signaling protocols, which may or may not be on the same frequency or frequency band.

In FIG. 1, a mobile wireless communications device 102 communicates in the first and second networks as the device 102 moves about. In one embodiment, one or both of the networks "A" and "B" comprise cells served by corresponding base station transceivers. In FIG. 1, for example, base transceivers 110 serve network "A" and base transceivers 120 serve network "B". The cells in a particular network may be grouped into service or location areas comprising multiple cells, the significance of which is discussed further below. Network "B" also includes one or more base transceivers serving at least a portion of the region served by Network "A". Mobile station 102 scans for service on the different networks, for example, by scanning the frequencies/bands of networks "A" and "B" in different modes of operation.

The wireless communications device is, for example, a cellular telephone or pager, wireless enabled Personal Digital Assistant (PDA) or laptop computer or some other wireless enabled communications device, capable of operating in different networks, for example, in networks "A" and "B" in FIG. 1. The exemplary communications device 102 in FIG. 1 is a mobile wireless cellular telephone.

The exemplary communications devices referred to in the instant patent specification are multi-mode devices capable of operating in different modes in a manner that permits or supports communicating in different networks, for example, in communications networks having different communications signaling protocols, and/or in communications networks operating on different frequencies or on different frequency bands, and/or in communications networks having some other differing service characteristic or feature. Some tri-band GSM cellular telephones, for example, operate in the 900 & 1800 MHz bands in one mode and operate in the 1900 MHz band in another mode. Some quad-band GSM cellular telephones operate in the 900 & 1800 MHz bands in one mode and operate in the 850 & 1900 MHz bands in another mode.

According to another aspect of the disclosure, during at least some time periods, for example, frequency scanning periods, the wireless communications device searches for service in a first mode during a first time period and the wireless communications device searches for service in a second mode during a second time period, wherein the wireless communications device searches in not more than one mode during a particular search period. Examples of scanning for services during different search periods include alternately scanning different frequencies or different frequency bands during corresponding scanning periods, or alternately scanning for different types of service during corresponding scanning periods, etc. Searching for service includes searching for better service, for example, for a home network or preferred network, when some lesser desirable service has already been obtained.

According to the instant disclosure, alternately searching or scanning for service is not limited to strict alternating. In one exemplary embodiment, a first frequency or band of frequencies is scanned during odd scanning periods 1, 3, 5, ... and a second frequency or band of frequencies is alternately scanned during even scanning periods 2, 4, 6.... In another embodiment, the first frequency/band is scanned during first and second sequential scanning periods, and the second frequency/band is scanned during a third sequential scanning period before resuming scanning for the first frequency/band during the fourth and fifth sequential scanning periods, etc. In some embodiments, there may be a delay between scanning periods. The alternate searching concepts may be extended to searching for additional modes, or frequency/bands as well. In a tri-mode cellular telephone handset, for example, a first mode is scanned during a first scanning period, a second mode is scanned during a second period, and a third mode is scanned during a third scanning period, and the sequence repeats.

According to a related aspect of the disclosure, when the communications device is searching for different communications services or scanning different frequencies/bands, corresponding to different modes of operation during corresponding scanning periods, power consumption is reduced in the wireless communications device. Power savings results when fewer than all modes are searched during a particular scanning period, and power usage is optimized when only one mode is searched during a particular search period.

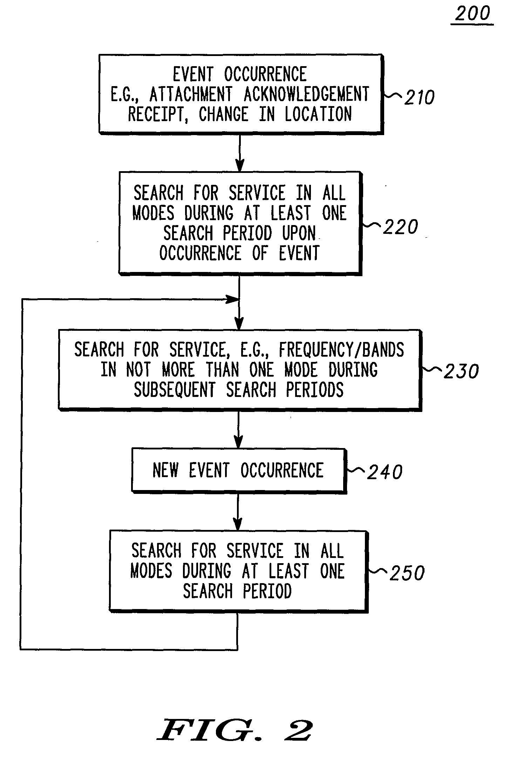

In one example not in accordance with the invention, illustrated in the exemplary diagram 200 of FIG. 2, at block 210, the communications device experiences an event, for example, the communications device attaches or registers with a network, e.g., a new PLMN, the occurrence of which may be confirmed upon receipt by the communications device of a registration acknowledgement. Alternatively, the event occurrence may be a change in location of the communications device, for example, a change in the location area within a communications network. A change in location may indicate that the communications device is moving rather than remaining stationary.

In FIG. 2, at block 220, the communications device searches or scans for service in all modes supported by the communications device during at least one search or scanning period after receiving the occurrence of the event at block 210, for example, upon receipt of a registration acknowledgement from a roaming or less preferred network, or upon changing location or location areas as discussed above. In one embodiment, for example, the communications device searches for service in all modes, for example, all frequency/bands, for at least one search period upon receiving the registration acknowledgement. By searching for service in all modes during the at least one search period, the device increases the likelihood that it will locate a particular network, for example, a H-PLMN or a preferred PLMN.

In FIG. 2, at block 230, after searching for service in all modes during the at least one common search period, the communications device searches for service in each mode in corresponding search periods, wherein the wireless communications device searches for service in not more than one mode in any of the subsequent search periods. In some embodiments, the communications device alternates searching in the different modes during corresponding search periods, as discussed above.

In FIG. 2, at block 240, searching for service in not more than one mode per search period continues, until a new event change occurs. As noted, the event change may be a new attachment or registration or a change in location of the communications device, as indicated for example by a location area. A change in location also includes changes in location, which may be determined by a GPS receiver of the communications device or communicated to the device by a message from the network in embodiments where location is computed at the network. At block 250, the device searches for service in all modes during at least one search period following the event change of block 240. The process then proceeds to block 230 as discussed above.

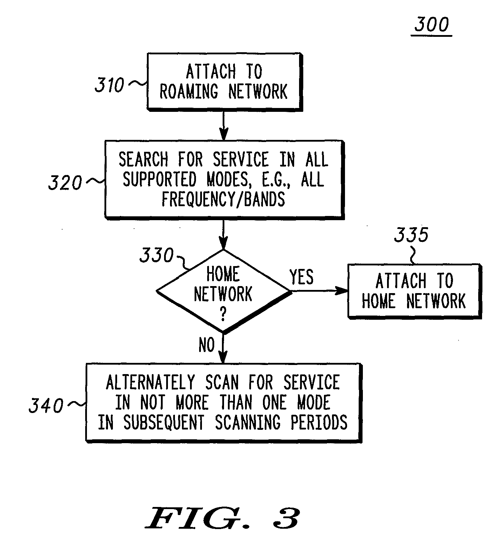

In the process diagram 300 of FIG. 3, at block 310, the communications device attaches or registers with a roaming network, for example, a PLMN other than the H-PLMN. As noted above, attachment or registration may be acknowledged upon receipt by the communications device of an attachment or registration acknowledgement. At block 320, searching begins after attaching to the roaming network. In some embodiments, there is a delay, for example, one or two minutes, between the network attachment at block 310 and the beginning of search period at block 320. In one embodiment, in the first two or three search periods after attachment, the device searches all modes, for example, scans all supported frequencies/bands, in an effort to locate a more desirable network, such as the home network, preferably within a single expiration of the search period timer.

In FIG. 3, at block 330, if the communications device is still roaming after searching at block 320, the communications device enters an alternating scanning mode at block 340 where the device searches modes alternately during subsequent corresponding search periods. For instance, upon expiration of the search period timer, a quad-band GSM phone will scan only the 900/1800 MHz bands and on the next expiration it will scan only the 850/1900 MHz bands and keep alternating back and forth upon further expirations. A tri-band GSM phone will scan only the 900/1800 MHz bands during one scan period, then scan only the 1900 MHz band during the next scan period, and keep alternating back and forth upon further expirations until the occurrence of an event that causes the communications device to search or scan all modes during one or more scanning periods. If the communications device locates the home network at block 320, the communications device will not be roaming at block 330, and the device will attach to the non-roaming or home network at block 335.

In some networks, the communications device may require several search periods to locate the most desirable network from the time that the desired network becomes available. In order to provide a higher probability of finding the most desirable network, for example, an H-PLMN or a preferred V-PLMN, the phone restarts the algorithm of FIG. 3 every time it registers with a roaming network. It may also be desirable to execute the algorithm of FIG. 3 when the communications device is moving, which may be indicated by a change in location, for example, changes location areas within a network. This means that after location updating, the first couple of search period timer expirations will result in the phone scanning all supported bands of all modes. But then after these scans, if the home or more desirable network is not located, the phone will revert back to the alternating search mode described above. In this way a relatively stationary user will remain in the alternating mode, since a more desirable network is not likely to become available to a stationary communications device. However, when the communications device detects that it is moving, as indicated by a change in location, the process is restarted so that the communications device may find a more desirable network as quickly as possible if a more desirable network becomes available upon moving into a new area. The disclosure balances the conflicting requirements of reducing current drain versus quickly finding the home/preferred network.

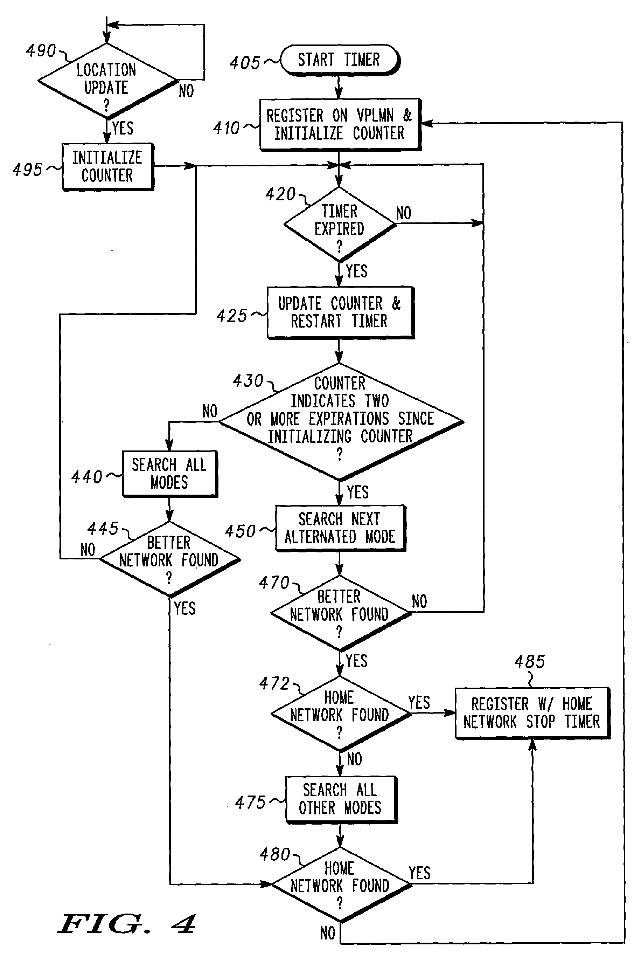

In one embodiment, the alternate scanning for service in different modes of operation in a multi-mode communications device is performed by logic within the communications device. Some GSM cellular communications devices, for example, scan frequency bands during periods of 6N minutes, where N is a parameter specified by a Subscriber Identity Module (SIM) card on the communications device. FIG. 4 is an exemplary network or service searching process 400 for a GSM wireless communications device, for example a GSM cellular phone, capable of operating in two modes, for example, modes "A" and "B". At block 405, the phone starts a search period timer, for example, the exemplary GSM timer of period 6N minutes. At block 410, the exemplary GSM phone registers with a roaming network, e.g., a V-PLMN, and initializes an incrementing or decrementing counter, for example, by setting or re-setting the counter to 0 or to some other value. At block 420, the process waits for the search period timer to expire. After the search period timer has expired, at block 425, the counter is updated and the search period timer is restarted. At block 430, if the counter value has not reached a specified value indicating that two timer expirations have occurred since the counter was initialized, the communications device searches for service in all modes, for example, the exemplary GSM phone searches the frequencies/bands for both mode "A" and mode "B" for a home or a more preferred network at block 440. If the counter value has reached the specified value at block 430, the communications device searches the next single mode in the alternating pattern, as discussed above, at block 450.

In FIG. 4, at blocks 445 and 470, if a better service or network is not found, the check for the next search period timer expiration continues at block 420. If a better service was found at 470, that service is checked if it is the home service at block 472. If better service is found other than the home network while the communications device is searching in the alternate search mode, all other modes are searched at block 475, preferably simultaneously, before registering with the better network or service provider to ensure that the best available network or service provider has been located. If the home network is located at blocks 472 or 480, the communications device registers with the home network and stops the search period timer at block 485. If the home network has not been found, the communications device registers with the new network, for example, a V-PLMN at block 410 and the process proceeds to block 420.

As noted many networks are divided into location areas, which comprise multiple cells. A change in locations areas within a particular network is an indication that the communications device is likely moving a significant distance. At block 490, if the communications device updates its location, the counter is re-initialized at block 495 and processing resumes at block 420. Re-initializing the counter when the phone is moving will cause the phone to search all modes, thereby increasing the likelihood that the phone registers with the home or a preferred network promptly. However, when the communications device is relatively stationary, the phone reduces its power consumption by alternately searching for service in the different modes during corresponding scanning periods.

While the present disclosure and what are considered presently to be the best modes of the inventions have been described in a manner that establishes possession thereof by the inventors and that enables those of ordinary skill in the art to make and use the inventions, it will be understood and appreciated that there are many equivalents to the exemplary embodiments disclosed herein and that myriad modifications and variations may be made thereto without departing from the scope of the inventions, which are to be limited not by the exemplary embodiments but by the appended claims.

## Claims

1. A method in a multi-mode wireless communications device (102), the method comprising registering (210, 310, 410) in a roaming network;
scanning (220, 320, 440) for service in all modes of the multi-mode wireless communications device during at least one common search period after registering in the roaming network;
the method further **characterised in**:
after scanning for service in all modes of the multi-mode wireless communications device during the at least one common search period, scanning (230, 340, 450) for service in each mode during subsequent search periods,
wherein the multi-mode wireless communications device scans for service in a single mode during each of the subsequent search periods.

2. The method of Claim 1,
initializing (410) a counter after registering in the roaming network,
updating (425) the counter upon the expiration of each search period;
scanning (450) for service in all modes of the multi-mode wireless communications device during at least one common search period until the counter reaches a specified count value.

3. The method of Claim 2, further comprising
changing locations,
re-initializing (495) the counter upon changing locations.

4. The method of Claim 1, scanning for service in each mode during subsequent search periods includes alternately scanning for service in each mode during corresponding search periods.

5. The method of Claim 1, scanning for service in all modes upon locating service while the multi-mode wireless communications device scans for service in a single mode during each of the subsequent search periods.

6. A multi-mode wireless communications device (102) adapted to perform the steps of the method as claimed in any preceding Claim.

## Patentansprüche

1. Verfahren in einer drahtlosen Multimoduskommunikationsvorrichtung (102), wobei das Verfahren das Registrieren (210, 310, 410) in einem Roaming-Netz; Scannen (220, 320, 440) nach einem Dienst in allen Modi der drahtlosen Multimoduskommunikationsvorrichtung während mindestens eines gemeinsamen Suchzeitraums nach dem Registrieren im Roaming-Netz umfasst;
wobei das Verfahren weiter **gekennzeichnet ist durch**:
nach dem Scannen nach einem Dienst in allen Modi der drahtlosen Multimoduskommunikationsvorrichtung während des mindestens einen gemeinsamen Suchzeitraums, Scannen (230, 340, 450) nach einem Dienst in jedem Modus während anschließender Suchzeiträume,
wobei die drahtlose Multimoduskommunikationsvorrichtung während jedem der anschließenden Suchzeiträume in einem einzelnen Modus nach einem Dienst scannt.

2. Verfahren nach Anspruch 1,
Initialisieren (410) eines Zählers nach dem Registrieren im Roaming-Netz,
Aktualisieren (425) des Zählers nach Ablauf jedes Suchzeitraums;
Scannen (450) nach einem Dienst in allen Modi der drahtlosen Multimoduskommunikationsvorrichtung während mindestens eines gemeinsamen Suchzeitraums, bis der Zähler einen vorgegebenen Zählwert erreicht.

3. Verfahren nach Anspruch 2, weiter umfassend das Ändern von Orten, Neuinitialisieren (495) des Zählers nach dem Ändern von Orten.

4. Verfahren nach Anspruch 1, wobei das Scannen nach einem Dienst in jedem Modus während anschließender Suchzeiträume das abwechselnde Scannen nach einem Dienst in jedem Modus während entsprechender Suchzeiträume umfasst.

5. Verfahren nach Anspruch 1, Scannen nach einem Dienst in allen Modi nach dem Lokalisieren eines Dienstes, während die drahtlose Multimoduskommunikationsvorrichtung nach einem Dienst in einem einzelnen Modus scannt, während jedem der anschließenden Suchzeiträume.

6. Drahtlose Multimoduskommunikationsvorrichtung (102), die angepasst ist, die Schritte des Verfahrens nach einem vorstehenden Anspruch auszuführen.

## Revendications

1. Procédé dans un dispositif de communication multi-mode sans fil (102), le procédé comprenant :
l'enregistrement (210, 310, 410) dans un réseau itinérance ;
le balayage (220, 320, 440) pour un service dans tous les modes du dispositif de communication multi-mode sans fil durant au moins une période de recherche commune après l'enregistrement dans le réseau itinérance ;
le procédé étant en outre **caractérisé par** :
après le balayage pour un service dans tous les modes du dispositif de communication multi-mode sans fil durant l'au moins une période de recherche commune, le balayage (230, 340, 450) pour un service dans chaque mode durant des périodes de recherche ultérieures,
où le dispositif de communication multi-mode sans fil balaie pour un service dans un mode unique durant chacune des périodes de recherche ultérieures.

2. Procédé selon la revendication 1, comprenant :
l'initialisation (410) d'un compteur après l'enregistrement dans le réseau itinérance,
la mise à jour (425) du compteur à l'expiration de chaque période de recherche ;
le balayage (450) pour un service dans tous les modes du dispositif de communication multi-mode sans fil durant au moins une période de recherche commune jusqu'à ce que le compteur atteigne une valeur de comptage spécifiée.

3. Procédé selon la revendication 2, comprenant, en outre, le changement d'emplacement,
la réinitialisation (495) du compteur lors du changement d'emplacement.

4. Procédé selon la revendication 1, dans lequel le balayage pour un service dans chaque mode durant des périodes de recherche ultérieures inclut le balayage alternatif pour un service dans chaque mode durant des périodes de recherche correspondantes.

5. Procédé selon la revendication 1, incluant le balayage pour un service dans tous les modes lorsqu'un service est repéré pendant que le dispositif de communication multi-mode sans fil balaie pour un service dans un mode unique durant chacune des périodes de recherche ultérieures.

6. Dispositif de communication multi-mode sans fil (102) adapté pour effectuer les étapes du procédé selon l'une quelconque des revendications précédentes.
